# EUROPEAN PATENT SPECIFICATION

(11) **EP 3 808 792 B1**
(45) Date of publication and mention of the grant of the patent: **03.07.2024**
(21) Application number: 19203751.3
(22) Date of filing: 17.10.2019
(51) Int. Cl.: C08G 65/336, C09D 171/02, C09J 171/02, C07K 7/06, C08F 2/26

(54) **AQUEOUS EMULSION OF POLYETHER HAVING AT LEAST ONE REACTIVE SILYL GROUP**
WÄSSRIGE EMULSION VON POLYETHER MIT MINDESTENS EINER REAKTIVEN SILYLGRUPPE
ÉMULSION AQUEUSE DE POLYÉTHER COMPORTANT AU MOINS UN GROUPE SILYLE RÉACTIF

(43) Date of publication of application: 21.04.2021
(73) Proprietor: Kaneka Belgium N.V., 2260 Westerlo-Oevel (BE)
(72) Inventor: Peeters, Luc, B-2260 Westerlo-Oevel (BE); Harumashi, Tatsuro, B-2260 Westerlo-Oevel (BE); Couwels, Jozef, B-2260 Westerlo-Oevel (BE)
(74) Representative: V.O.

(56) References cited:
- US-A1- 2009 131 567
- US-A1- 2018 030 274
- US-A1- 2019 209 443
- SINGH P ET AL: "Potential applications of microbial surfactants in biomedical sciences", TRENDS IN BIOTECHNOLOGY, ELSEVIER PUBLICATIONS, CAMBRIDGE, GB, vol. 22, no. 3, 1 March 2004 (2004-03-01), pages 142-146, XP004491830, ISSN: 0167-7799, DOI: 10.1016/J.TIBTECH.2004.01.010
- ANNETTE F. DEXTER ET AL: "Peptides As Functional Surfactants", INDUSTRIAL & ENGINEERING CHEMISTRY RESEARCH, vol. 47, no. 17, 3 September 2008 (2008-09-03), pages 6391-6398, XP055009674, ISSN: 0888-5885, DOI: 10.1021/ie800127f

## Description

The present invention relates to an aqueous emulsion of polyether having at least one reactive silyl group, preferably reactive terminal silyl group, to a process for preparing such an emulsion and to potential applications of such an emulsion.

Silyl terminated polyethers are a special class of polymers which have as an end group of the long middle polyether section of the polymer, also referred to as a terminating group, a silyl type molecule. The reactive silyl group is crosslinked by the formation of a siloxane bond, which is accompanied by hydrolysis due to moisture even at room temperature, to give a rubbery cured product. Silyl terminated polyethers are main components in solvent-free sealant and adhesive products. These products are typically isocyanate free. Sealant products manufactured with silyl terminated polyethers have good characteristics, such as adhesion on a wide range of substrate materials, and have good temperature and UV resistance. This makes these products applicable in a wide range of applications, such as in building and construction, industry, transportation, flooring, waterproofing, DIY and many others.

The silyl terminated polyethers can be formed using relatively simple chemistry techniques. On application the products cure from a liquid or gel state to a solid. Curing entails cross-linking by the hydrolysis of silyl ethers. Cross-linking improves certain characteristics of the final material.

A specific type of such silyl terminated polyethers is known as Kaneka's MS Polymer^{™}. As a middle section it contains a functionalized polyether backbone with methoxysilane terminal groups. It provides excellent performances and makes MS Polymer-based products unique and beneficial for various applications mainly as sealant or adhesive in varying areas such as construction, industry, consumer and specialties. Examples of main applications include construction sealant, flooring adhesive, waterproofing and roof applications, industrial transportation, windscreen adhesive. MS Polymers provide environmental friendly alternatives to existing technologies in that no solvents are required, they are isocyanate-free, and also PVC-, silicone- and detergent-free and provide very low emissions. MS Polymers provide easy and robust processing and such versatile properties as self-levelling and thixotropic, application by spray, extrusion, notched spatual or brush, tunable curing properties, primerless adhesion to many different substrates, outstanding weather resistance, high strength adhesives and low modulus sealants. A broad range of MS Polymer grades is available. These may differentiate in degree of functionalization (number and nature of groups attached to the backbone) (mono or bifunctional) and backbone structure in a wide viscosity range. Typically a dimethoxymethylsilyl terminated polyether or trimethoxysilyl terminated polyether is used.

Recently a need has arisen to provide aqueous emulsions of such MS Polymers, particularly as coating for automotive and roofing applications and for use in the foaming industry. Such an aqueous emulsion would provide a reduced viscosity which would make processing easier and would allow easier application by spraying.

Aqueous emulsions of high viscosity silicone polyethers having a viscosity greater than 10 kPa-s at 25°C have been described in WO 2010/075244. They are prepared by combining a SiH terminated polyether copolymer having an HLB of less than 7, an organopolysiloxane having terminal unsaturated groups, a hydrosilylation catalyst, and an emulsifier to form an oil phase, and then admixing water to the oil phase to form an emulsion. The emulsifier may be an anionic surfactant (e.g. alkali metal soaps of higher fatty acids, alkylaryl sulfonates, long chain fatty alcohol sulfates, olefin sulfates and olefin sulfonates, sulfated monoglycerides, sulfated esters, sulfonated ethoxylated alcohols, sulfosuccinates, alkane sulfonates, phosphate esters, alkyl isethionates, alkyl taurates and alkyl sarcosinates), cationic surfactant (e.g. alkylamine salts, quaternary ammonium salts, sulfonium salts and phosphonium salts), nonionic surfactant (e.g. condensates of ethylene oxide with long chain fatty alcohols or fatty acids such as a C₁₂₋₁₆ alcohol, condensates of ethylene oxide with an amine or an amide, condensation products of ethylene and propylene oxide, esters of glycerol, sucrose, sorbitol, fatty acid alkylol amides, sucrose esters, fluoro-surfactants and fatty amine oxides), amphoteric surfactant (e.g. imidazoline compound, alkylaminoacid salts, betaines) or any mixture thereof.

EP 2671933 describes an aqueous emulsion comprising organosiloxane, organohydrogenpolysiloxane and surfactant. A specific nonionic surfactant selected from polyoxyalkylene alkyl ethers, polyoxyalkylene phenyl ethers, and mixtures thereof, is used to control the size of the emulsion particles so as to improve wettability to plastic film.

US 2018/030274 discloses a process for preparing an aqueous emulsion of polyether having at least one reactive silyl group, preferably reactive terminal silyl group e.g. Geniosil STP-E30 and STP-E10, comprising the steps of (a) mixing an emulsifier with water, (b) adding a mixture of the polyether having at least one reactive silyl group and a siloxane resin to the mixture obtained in step (a) under continuous mixing in order to form a gel e.g a gelatinous paste, (c) adding water and preservatives to the gel obtained in step (b) under continuous mixing, (d) continuing mixing to form a thin emulsion. Only water is used in the mixing step (a) and this leads to an emulsion that still is not stable enough.

US 2019/209443 discloses gel compositions comprising a polyhydric alcohol, an oily component and ethanol, wherein the incorporation of a biosurfactant enhances the stability.

A review of the ability of biosurfactants to stabilize aqueous emulsions is provided by Singh P et al., "Potential applications of microbial surfactants in biomedical sciences", Trends in Biotechnology, Elsevier Publications, Cambridge, GB, Vol 22, No 3, (2004-03-01), pages 142-146, and by Anette F. Dexter et al., "Peptides as functional surfactants", Industrial & Engineering Chemistry Research, Vol. 47, No 17, (2008-09-03), pages 6391-6398.

US 2009/131567 discloses an aqueous emulsion of a MSP polymer oil with a polypropoxy chain at its silylated ends, with methoxy functional groups using ethoxylated isotridecyl alcohol as surfactant. Said dispersion is used for adhesive tests.

However there continues to exist a need to provide storage stable aqueous emulsions of polyethers having at least one reactive silyl group, that are stable and show no phase separation for at least 24 hours at room temperature.

According to a first aspect of the present invention a process for preparing an aqueous emulsion of a polyether having at least one reactive silyl group, preferably reactive terminal silyl group is provided, said process comprising the steps of
(a) mixing a cyclic lipopeptide biosurfactant with a low molecular weight polyol,
(b) adding the polyether having at least one reactive silyl group to the mixture obtained in step (a) under continuous mixing in order to form a gel,
(c) adding water to the gel obtained in step (b) under continuous mixing,
(d) continuing mixing,
(e) cooling down the mixture to ambient temperature, if needed.

According to a second aspect of the present invention an aqueous emulsion of a polyether having at least one reactive silyl group is provided, said emulsion obtainable by the process according to the first aspect of the invention.

According to a third aspect of the present invention the use of an aqueous emulsion according to the second aspect of the invention for binder, coating or adhesive, foamed or non-foamed applications is provided.

Using the process of the present invention stable emulsions of polyethers having at least one reactive silyl group are provided, said aqueous emulsion being stable for at least 24 hours at room temperature, preferably at least 48 hours, more preferably at least 1 week, most preferably at least 8 or even 12 weeks. Some of the emulsions obtained by the present invention remain stable for more than 1 year. In this context the term "stable" is to be interpreted as not showing any phase separation upon visual inspection. Most preferably said aqueous emulsion are also stable for at least 12 hours at elevated temperature (such as 50°C). The specific biosurfactant used and the specific method steps (a)-(e) and the order in which these steps are performed are absolutely critical to obtain the desired stable aqueous emulsions of polyethers having at least one reactive silyl group.

Although the present invention relates to aqueous emulsions of polyethers having at least one reactive silyl group, the same process is also applicable to polyesters or polycarbonates having at least one reactive silyl group.

The polyether containing at least one reactive silyl group for use in the present invention has as main skeleton a polyether polymer. As used herein the term "polyether/poyethers" designates a polyoxyalkylene group. Such a group may be represented by the formula (CₘH₂ₘO)_{y} wherein m is from 2 to 4 inclusive and y is greater than 4 and may generally range from 5 to 1000 .The polyoxyalkyene group may comprise oxyethylene units (C₂H₄O), oxypropylene units (C₃H₆O), oxybutylene units (C₄H₈O), oxytetramethylene units or mixtures thereof. The main structure may be composed of only one kind of repeating oxyalkylene or two or more kinds of repeating units. When mixtures are present (such as polyoxyethylene-polyoxypropylene copolymer) typically they are in the form of a random copolymer. According to a preferred embodiment of the present invention the polyether chain is a polyoxypropylene chain. The main chain structure of the polyether may be linear or may be branched. When the polymer has branched chains, the branched chain number is preferably 1-4, most preferably 1.

In some embodiments of the invention, the backbone skeleton of the reactive silyl-group containing polyether may contain other components such as a urethane bond component as long as the effect of the present invention is not significantly impaired. The urethane bond component is not particularly limited and examples thereof include groups (hereinafter also referred as amido segments) formed by reaction between an isocyanate group and an active hydrogen group. Such amido segments can be represented by the formula (1): -NR¹-C(=O)- wherein R¹ is an organic group having 1-10 carbon atoms or a hydrogen atom. The aforementioned segment specifically includes a urethane group produced by reaction of an isocyanate group and a hydroxyl group, or an amino group and carbonate; a urea group produced by reaction of an isocyanate group and an amino group; a thiourethane group produced by a reaction of an isocyanate group and a mercapto group and the like. Moreover a group produced by a further reaction of active hydrogen in the abovementioned urethane group, urea group and thioureagroup, and an isocyanate group is also encompassed in the group of formula (1). When the main chain of the polyether contains an amido segment, the number on average of the amido segment per molecule is preferably 1-10, more preferably 1.5-5, particularly preferably 2-3.

The reactive silyl group as used herein is a silicon-containing group having a hydroxyl group or a hydrolysable group bonded to a silicon atom and capable of forming a siloxane bond. The reactive silyl group is preferably represented by the formula (2):

- SiR²ₐY₃₋ₐ

wherein R² is a substituted or unsubstituted hydrocarbon group having 1-20 carbon atoms, each Y is independently a hydroxyl group or a hydrolysable group and a is 0 or 1. A reactive silyl group represented by formula (2) is a group crosslinkable by forming a siloxane bond by a reaction accelerated by a catalyst for silanol condensation. Examples of R² in the formula (2) include alkyl groups, such as methyl group, ethyl group and the like; cycloalkyl groups such as cyclohexyl group and the like; aryl groups such as phenyl group and the like; aralkyl groups such as benzyl group and the like; a triorganosiloxy group represented by -OSi(R')₃ wherein R' is methyl group, phenyl group and the like; fluoroalkyl groups such as fluoromethyl group, difluoromethyl group and the like; chloroalkyl groups such as chloromethyl group, 1-chloroethyl group and the like; alkoxyalkyl groups such as methoxymethyl group, ethoxymethyl group, phenoxymethyl group, 1-methoxyethyl group and the like; aminoalkyl groups such as aminomethyl group, N-methylaminomethyl group, N,N-dimethylaminomethyl group and the like; acetoxymethyl group, methylcarbamate group, 2-cyanoethyl group and the like. Of these, alkyl group is preferably, and methyl group is particularly preferable. As hydrolyzable group for Y in the formula (2), a known hydrolysable group can be mentioned. Examples of the hydrolysable group include a hydrogen, a halogen, an alkoxy group, an alkenyloxy group, an aryloxy group, an acyloxy group, a ketoxymate group, an amino group, an amido group, an acid amido group, an aminooxy group, a mercapto group and the like. Of these, a halogen, an alkoxy group, an alkyloxy group, and an acyloxy group are preferable with an alkoxy group as more preferable and a methoxy and an ethoxy group as particularly preferable. As the substituted or unsubstituted hydrocarbon group having 1-20 carbon atoms for R² in the formula (2), an alkyl group having 1-10 carbons atoms, an aryl group having 6-10 carbon atoms or an aralkyl group having 7-10 carbon atoms is preferable, and these may be bonded to halogen atom, nitro group, amino group, cyano group or hydroxyl group as a substituent. As a reactive silyl group represented by the formula (2), trimethoxysilyl group, triethoxysilyl group, tris(2-propenyloxy) silyl group, triacetosilyl group, dimethoxymethylsilyl group, diethoxymethylsilyl group, diisopropoxymethylsilyl group, (chloromethyl)dimethoxysilyl group, (methoxymethyl)dimethoxysilyl group, (methoxymethyl)diethoxysilyl group, and (ethoxymethyl)dimethoxysilyl group are specifically preferable. Of these dimethoxymethylsilyl group, trimethoxysilyl group and triethoxysilyl are particularly preferable.

The polyethers for use according to the invention may have only one reactive silyl group or more than one. The average number of the reactive silyl groups per molecule of polyether is generally however not more than 6, preferably not more than 5. Preferably the average number of reactive silyl groups contained in the polyether is 1 to 4, more preferably 1.1 to 3, still more preferably 1.3 to 2.5 and particularly preferably 1.5 to 2.3 per molecule. The reactive silyl groups are preferably located at terminal moieties of the main chain polyether structure.

The number average molecular weight of the polyether containing at least one reactive silyl group is preferably not less than 10000, preferably not less than 18000. It is preferably not more than 50000, more preferably not more than 35000, particularly preferably not more than 30000. According to a particular embodiment of the present invention a polyether containing at least one reactive silyl group having a number average molecular weight of at least 10000 is used together with a polyether having at least one reactive silyl group and having a molecular weight below 10000, e.g. about 5000. In such case the weight ratio of the low MW (molecular weight) polyether to the high MW(molecular weight) polyether is preferably in the range 70/30 to 1/99.

In some embodiments of the present invention the polyether containing at least one reactive silyl group can be used together with a (meth)acrylate based polymer containing at least one reactive silyl group. More detailed descriptions of such (meth)acrylate based polymers containing reactive silyl groups can be found in US 10150895 and EP 2684690. In other embodiments the polyether containing at least one reactive silyl group can be used together with epoxy and/or bitumen.

Further detailed descriptions of suitable polyethers containing at least one reactive silyl group for use in the present invention and ways to prepare them are provided in US 10150895 and EP 2684690.

In a preferred embodiment of the present invention the polyether containing at least one reactive silyl group is selected from at least one of Kaneka's MS Polymers such as S203H, S303H, S227, S327, SAX 220, SAX 260, SAX 400, SAX 015, SAT 145, MAX 602, MAX 923, MAX 951, SAX 750, SAX 510, SAX 520, SAX 530, , SAX 580, SAX 590, SAX575 MA451, MA480, MA850, MA452 and MA490. Particularly preferred are MS Polymer S303H, SAX400, SAX015, SAX590, MA451 and MA490.

According to the present invention a cyclic lipopeptide biosurfactant is used to emulsify the polyether containing at least one reactive silyl group in water. Traditional surfactants such as non-ionic surfactants based on fatty alcohol ethoxylate, fatty acid esters, vegetable fatty acid and polyether modified siloxane do not provide stable aqueous emulsions of said polyether; phase separation takes place already after 1 to 3 days, also if the particular process steps (a)-(e) of the invention are followed.

A cyclic lipopeptide biosurfactant is a cyclic peptide which has a lipophilic group such as a long-chain alkyl group and which has a surface active function. A cyclic lipopeptide biosurfactant may be cationic when the biosurfactant contains many basic amino acids. However, a cyclic lipopeptide biosurfactant may also have a negative group such as a carboxy group and is then anionic. Preferably the cyclic lipopeptide biosurfactant for use in the present invention is anionic. A cyclic lipopeptide biosurfactant for use in the present invention is not particularly restricted as long as the biosurfactant has a bulky cyclic structure and is a peptide compound having a surface active function. The cyclic lipopeptide biosurfactant can be exemplified by surfactin, arthrofactin, lichenysin and viscosin.

The cyclic lipopeptide biosurfactant for use in the present invention is preferably surfactin or a salt thereof which can be represented by formula (3) 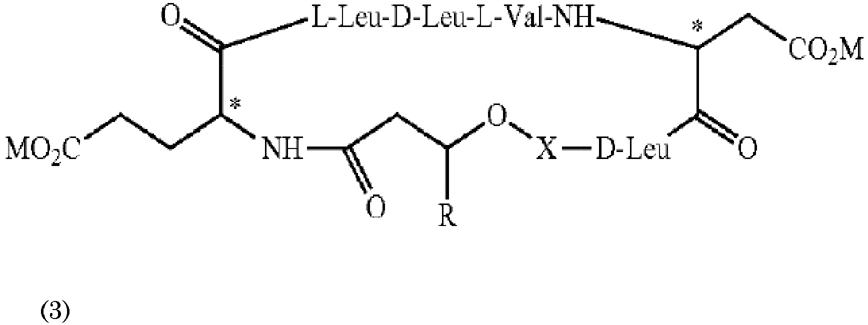 wherein X is a residue of an amino acid selected from leucine, isoleucine and valine and R is a C₉₋₁₈ alkyl group, which may be branched and M is hydrogen, an alkali metal, an alkaline earth metal, an optionally substituted amine or the like. In formula (I) L-Leu means L-leucine, D-Leu means D-leucine and L-Val means L-valine. Although the amino acid residue as X may be either in a L-form or a D-form, the L-form is preferred.

R may be exemplified by a nonyl group, a decyl group, an undecyl group, a dodecyl group, tridecyl group and the like. Branched R may be exemplified by a 7-methyloctyl group, an 8-methylnonyl group, a 9-methyldecyl group, a 10-methylundecyl group, an 11-methyldodecylgroup, a 6-methyloctyl group, a 7-methylnonyl group, an 8-methyldecyl group, a 9-methylundecyl group, a 10-methyldodecyl group and the like. R may be substituted with one substituent or not less than 2 substituents. Such a substituent is exemplified by an amino group, a hydroxyl group, a phenyl group, an aryl group, an alkanoyl group, an alkenyl group, an alkynyl group, an alkoxy group, a nitro group, a halogen atom and the like.

M may be an alkali metal such as lithium, sodium, potassium or the like. Examples of suitable alkaline earth metal M is beryllium, magnesium, calcium or the like. The optionally substituted amine is not particularly limited as long as the amine can form a salt with a surfactin, and is a monosubstituted amine, a di-substituted amine and tri-substituted amine in addition to ammonia. The substituent of the amine is exemplified by an alkyl group such as a methyl group, an ethyl group, a n-propyl group, an isopropyl group, a n-butyl group and a t-butyl group; an aralkyl group such as a benzyl group, a methylbenzyl group and a phenylethyl group; and an aryl group such as a phenyl group, a toluoyl group and a xylyl group; and the like. Specifically the amine is exemplified by methylamine, ethylamine, benzylamine, aniline, diethylamine, dicyclohexylamine, pyrrolidine, morpholine, N-benzyl-N-ethylamine, N-ethylamine, trimethylamine, pyridine and the like. A proton may be added to the amine to become an ammonium ion. The abovedescribed organic groups may be substituted with one substituent or not less than 2 substituents. M is preferably an alkali metal such as sodium and potassium and particularly sodium.

The surfactin can be isolated from a culture broth prepared by culturing a microorganism of the genus Bacillus in accordance with known methods as, for example, described in US 2013/197190 and WO 02/26961. The surfactin may be a purified product or an unpurified product. Alternatively the product of the surfactin obtained by a chemical synthesis method may be similarly used.

Surfactin has an activity of decreasing the surface tension at low concentrations of 10 ppm or less and is easily biodegradable. It is known as a surfactant to emulsify silicone oil in aqueous cosmetic compositions, as described e.g. in EP 3459521, where surfactin has the additional benefit of low transdermal toxicity compared to synthetic surfactants.

Either one surfactin may be used or two or more different surfactins of formula (I) may be used.

A particularly preferred cyclic lipopeptide biosurfactant for use in the present invention is Kaneka's Sodium Surfactin wherein X is L-leucine and R is 10-methylundecyl group and M is sodium. Said compound has a molecular weight of 1036 and has 24 hydrogen bonding counts.

The process for preparing the aqueous emulsion of a polyether having at least one reactive silyl group according to the present invention involves the following steps:
(a) mixing a cyclic lipopeptide biosurfactant with a low molecular weight polyol,
(b) adding the polyether having at least one reactive silyl group to the mixture obtained in step (a) under continuous mixing in order to form a gel,
(c) adding water to the gel obtained in step (b) under continuous mixing,
(d) continuing mixing,
(e) cooling down the mixture to ambient temperature, if needed.

Such as process, also called D-phase emulsification (a low energy mixing process to make oil/water nanoemulsions), is another critical factor in obtaining stable aqueous emulsions of said polyether containing at least one reactive silyl group. If, for example, firstly the polyether and the biosurfactant are mixed at 80°C and subsequently water is slowly adding under continuous mixing at 80°C and the mixing is continued for 30 minutes followed by cooling down, a stable emulsion cannot be obtained - phase separation takes place after 1 day.

Such as D-phase emulsification generally comprises a first step of forming an intermediate phase by mixing the surfactant and a low molecular weight polyol, a second step of adding an oil phase component to the mixture in which the intermediate phase has been formed and a third step of adding an aqueous phase component. These steps can be carried out at any temperature however from the standpoint of uniformly mixing the components it is preferred to carry out these steps by mixing the components with heating at 35 to 85°C. Further, these steps are preferably carried out with stirring and the stirring may be manual stirring or mechanical stirring.

According to the present invention step (a) involves mixing the cyclic lipopeptide biosurfactant with a low molecular weight polyol. Said low molecular weight polyol preferably has a molecular weight of between 50 and 500, preferably between 80 and 250. Adding polyol with higher molecular weight does not provide stable emulsions. Examples of suitable low molecular weight polyols are glycerol, sorbitol, diglycerol and pentaerythritol. The weight ratio between the low molecular weight polyol and the cyclic lipopeptide biosurfactant is generally between 7/1 and 30/1, preferably between 10/1 and 15/1, in order to obtain an aqueous emulsion with optimum stability.

According to a particular embodiment, in step (a) the low molecular weight polyol is used together with water. In such embodiments the weight ratio between polyol and water is generally higher than 1.

Generally in the present invention the amount of low molecular weight polyol ranges from 4 to 25 wt%, preferably from 10 to 20 wt% based on the total amount of cyclic lipopeptide biosurfactant, the polyether having at least one reactive silyl group and the low molecular weight polyol.

Generally in the present invention the amount of cyclic lipopeptide biosurfactant ranges from 0.1 to 5 wt%, preferably from 0.5 to 2 wt% based on the total amount of cyclic lipopeptide biosurfactant, the polyether having at least one reactive silyl group and the optional low molecular weight polyol. Hence very low amounts of biosurfactant can be used in the present invention, considerably lower than traditional surfactants.

Step (a) is generally carried out a temperature of between 20 and 100°C, preferably between 35 and 85°C, most preferably about 80°C.

Mixing in step (a) takes place generally until a homogeneous mixture is obtained wherein the cyclic lipopeptide biosurfactant is well dispersed in the polyol and no large particles are visible anymore. In general such a homogeneous mixture is formed after a mixing time of 5 to 15 minutes. Usually the mixture is first mixed at 500 rpm for 10 minutes and then at 2000 rpm for another 20 minutes. Turbine stirrers are generally used although other types of stirrers can be used as well.

As used in this invention the term "homogeneous mixture" refers to a mixture wherein the components that make up the mixture are uniformly distributed throughout the mixture. Such a mixture consists of a single phase and appears uniform to the eye. Homogeneity is usually visually checked.

Step (b) of the process of the present invention involves adding the polyether having at least one reactive silyl group to the mixture obtained in step (a) under continuous mixing in order to form a gel. The formation of a gel structure is required in order to obtain ultimately a stable emulsion of the polyether in water. Gels are defined as substantially interacted systems which exhibit no or less flow when in the steady-state. The gel of the present invention has droplets of the polyether dispersed in the polyol phase, these droplets interacting with the polyol phase. Said gel can be slightly fluid and is generally not very sticky. The polyether is generally blended in slowly, like 2 to 5 drops per second. If the polyether is added all at once then usually no gel is formed. The polyether can also be added in several distinct portions, each portion being mixed generally until a homogeneous mixture is obtained. In general the gel is formed after 2 minutes of mixing time but mixing is generally continued for up to 15 or even 30 minutes. Mixing speed is generally about 500 rpm.

Step (b) is generally carried out a temperature of between 20 and 100°C, preferably between 35 and 85°C, most preferably about 80°C.

Step (c) of the process of the present invention involves adding water to the gel obtained in step (b) under continuous mixing. In general mixing takes place during a period of 3 to 5 minutes at a mixing speed of 100-500 rpm or even higher than 500 rpm. The amount of water added is generally such that a solids content of between 40 and 70 %, preferably 45 to 60 % is obtained, the solids content referring to the weight content of polyether and biosurfactant and any other solid additives compared to the total weight of the emulsion.

Step (c) is generally carried out a temperature of between 20 and 100°C, preferably between 35 and 85°C, most preferably about 80°C.

Step (d) of the process of the present invention involves continuing the mixing generally until a homogeneous mixture is obtained. In general step (d) takes about 3 to 5 minutes but the mixing may be continued for a period of about 30 minutes. Mixing speed is generally about 2000 rpm.

Step (d) is generally carried out a temperature of between 20 and 100°C, preferably between 35 and 85°C, most preferably about 80°C.

In step (e) the mixture is cooled down to ambient temperature, if needed.

A particularly preferred aqueous emulsion prepared according to the process of the present invention contains glycerol in an amount of 10 to 25 phr, preferably about 12.5 phr, surfactin in an amount of 0.5 to 2.5 phr, preferably about 1.25 phr, MS Polymer SAX590 in an amount of 10 to 455 phr, preferably about 100 phr and water in an amount of 10 to 455 phr, preferably about 100 phr. The obtained emulsion is stable for more than 6 months at room temperature and for more than 16 hours at elevated temperature (50°C).

According to a second of the present invention an aqueous emulsion of a polyether having at least one reactive silyl group is provided, said emulsion obtainable by the process according to the first aspect of the invention.

The medium diameter of particle size distribution (D50) of the obtained emulsion generally ranges from 0.5 to 20 µm, preferably from 1 to 10 µm, most preferably from 1 to 5 µm.

The obtained aqueous emulsions of polyethers having at least one reactive silyl group of the present invention are very stable, in general for at least 24 hours at room temperature, preferably at least 48 hours, more preferably at least 1 week, most preferably at least 8 or even 12 weeks. Some of the obtained aqueous emulsions remain stable for more than 1 year at room temperature.

The aqueous emulsion of the present invention may further contain various additives. If additives are added they are generally added in step (d).

Suitable additives can be selected from catalysts, rheology control agents such as thixotropic agents (e.g. polyamide waxes, fumed silica), pigments (e.g. TiO₂, carbon black), anti-oxidants, UV and light stabilizers (e.g. hindered phenol anti oxidants), adhesion promotors (e.g. amino/epoxysilanes), plasticizers (e.g. phthalates, PPG), fillers (e.g. talc, fumed silica, silica).

Examples of suitable curing catalysts include strong acid catalysts such as methyl sulfonic acid and alkyl acid phosphate. These catalysts provide fast gelation/curing but given that surfactin hydrolyses with strong acids their use will depend on the application envisaged. Other suitable catalysts include potassium neodecanoate and water based methyl tin which also provide fast curing but provide the additional benefit that the emulsion remains stable after addition of the catalyst. These latter catalysts may find particular use for sprayable applications and coating applications.

According to a third aspect of the present invention the use of an aqueous emulsion according to the second aspect of the invention for binder, coating or adhesive, foamed or non-foamed applications is provided.

Specific applications of the aqueous emulsions of the present invention include water based adhesives and coatings, primer for concrete, water barrier and binder for stone and cork.

The invention is illustrated but not limited by the following examples in which the following ingredients were used:
MS Polymer SAX590; silyl-terminated polyether available from Kaneka
Surfactin: cyclic lipopeptide biosurfactant available from Kaneka
ESTISURF 510: fatty alcohol ethoxylated surfactant available from Esti Chem
ESTISURF 970: nonionic emulsifier based on vegetable fatty acids available from Esti Chem
ESTISURF RE 100: castor oil ethoxylated dioleate surfactant available from Esti Chem
NaHCO3: as pH controller
BYK-3450: polyether modified siloxane surfactant available from BYK
BYK-3451: polyether modified siloxane surfactant available from BYK

### Example 1: Comparison of different types of surfactants

Glycerol and different types of surfactant as identified in Table 1 below in the amounts indicated in Table 1 were mixed at 80°C for 10 minutes at 500 rpm and then for another 20 minutes at 2000 rpm. In a subsequent step the silyl-terminated polyether was added in small portions under continuous mixing at 80°C and 500 rpm. When a thick gel was formed water was added slowly and mixed for 30 minutes at 2000 rpm and 80°C. The obtained emulsion was put in a transparent plastic beaker and stability of the emulsion was checked.

**Table 1**

| Sample No | 1 | 2 | C1 | C2 | C3 | C4 | C5 | C6 | C7 | C8 | C9 | C10 | C11 | C12 | C13 | C14 | C15 | C16 |
|---|---|---|---|---|---|---|---|---|---|---|---|---|---|---|---|---|---|---|
| Glycerol | 50 | 50 | 50 | 50 | 50 | 50 | 50 | 50 | 50 | 50 | 50 | 50 | 50 | 50 | 50 | 50 | 50 | 50 |
| Surfactin | 5 | 5 | | | | | | | | | | | | | | | | |
| ESTISURF 510 | | | 5 | 5 | 10 | 10 | | | | | | | | | | | | |
| ESTISURF 970 | | | | | | | 5 | 5 | 10 | 10 | | | | | | | | |
| ESTISURF RE 100 | | | | | | | | | | | 5 | 5 | 10 | 10 | | | | |
| BYK 3450 | | | | | | | | | | | | | | | 5 | 5 | | |
| BYK 3451 | | | | | | | | | | | | | | | | | 5 | 5 |
| SAX590 | 400 | 700 | 200 | 400 | 200 | 400 | 200 | 400 | 200 | 400 | 200 | 400 | 200 | 400 | 400 | 400 | 400 | 400 |
| NaHCO3 | | | | | | | | | | | | | | | 1 | 1 | 1 | 1 |
| Demi water | 400 | 400 | 400 | 400 | 400 | 400 | 400 | 400 | 400 | 400 | 400 | 400 | 400 | 400 | 400 | 400 | 400 | 400 |
| Total | 855 | 1155 | 655 | 855 | 660 | 860 | 655 | 855 | 660 | 860 | 655 | 855 | 660 | 860 | 656 | 856 | 656 | 856 |
| Stability | | | | | | | | | | | | | | | | | | |
| Immediate after mixing | Stable emulsion | Stable emulsion | Incompatible with glycerol | | | | No emulsion formed | | | | | | | | | | | |
| 12 weeks RT | Stable emulsion | Stable emulsion | | | | | | | | | | | | | | | | |
| 4 weeks 50°C | Stable emulsion | Stable emulsion | | | | | | | | | | | | | | | | |

The above results show that only with a cyclic lipopeptide biosurfactant (Surfactin) stable aqueous emulsions of the silyl terminated polyether can be obtained. Even if D-phase mixing is used with conventional surfactants stable emulsions could not be obtained.

### Example 2: Alternative mixing method (Comparative)

MS Polymer and different types of surfactants and optionally pH-controller were added together and mixed for 5 minutes at 500 rpm and 50°C and for another 10 minutes at 1000 rpm and 50°C. Subsequently water was slowly added and mixing continued for 20 minutes and 2000 rpm and 50°C. The obtained emulsion was put in a transparent plastic beaker and stability of the emulsion was checked. Results are presented in Table 2 below.

**Table 2**

| | C17 | C18 | C19 | C20 | C21 | C22 | C23 | C24 | C25 | C26 |
|---|---|---|---|---|---|---|---|---|---|---|
| SAX590 | 30 | 50 | 30 | 50 | 30 | 50 | 30 | 50 | 30 | 50 |
| Surfactin | 5 | 5 | 10 | 10 | | | | | | |
| ESTISURF 510 | | | | | 10 | 10 | | | | |
| ESTISURF 970 | | | | | | | 10 | 10 | | |
| ESTISURF RE100 | | | | | | | | | 10 | 10 |
| NaHCO3 | | | | | 1 | 1 | 1 | 1 | 1 | 1 |
| Water | 70 | 50 | 70 | 50 | 70 | 50 | 70 | 50 | 70 | 50 |
| Total | 105 | 105 | 110 | 110 | 111 | 111 | 111 | 111 | 111 | 111 |
| Stability | | | | | | | | | | |
| Immediate after mixing | Emulsion formed | Emulsion formed | Emulsion formed | Emulsion formed | Emulsion formed | Emulsion formed | Emulsion formed | Emulsion formed | Emulsion formed | Emulsion formed |
| After 1 day | Phase separation | Phase separation | Phase separation | Phase separation | Phase separation | Phase separation | Phase separation | Phase separation | Phase separation | Phase separation |

These results show that when alternative mixing methods are used (no D-phase mixing) even with a cyclic lipopeptide surfactant stable emulsions of the silyl terminated polyether cannot be obtained.

## Claims

1. Process for preparing an aqueous emulsion of a polyether having at least one reactive silyl group, preferably reactive terminal silyl group comprising the steps of
(a) mixing a cyclic lipopeptide biosurfactant with a low molecular weight polyol,
(b) adding the polyether having at least one reactive silyl group to the mixture obtained in step (a) under continuous mixing in order to form a gel,
(c) adding water to the gel obtained in step (b) under continuous mixing,
(d) continuing mixing,
(e) cooling down the mixture to ambient temperature, if needed.

2. Process according to claim 1 wherein the main chain of the polyether having at least one reactive silyl group is a poly-oxy-propylene chain.

3. Process according to any one of the preceding claims wherein the reactive silyl group is a silyl group containing at least one alkoxy group, preferably two or three alkoxy groups and is preferably selected from at least one of methyl dimethoxy silyl group, trimethoxy silyl group and triethoxy silyl group.

4. Process according to any one of the preceding claims wherein the cyclic lipopeptide biosurfactant is surfactin or a salt thereof represented by the formula wherein X is a residue of an amino acid selected from leucine, isoleucine and valine and R is a C₉₋₁₈ alkyl group, which may be branched and M is hydrogen, an alkali metal, an alkaline earth metal, an optionally substituted amine or the like.

5. Process according to any one of the preceding claims wherein the low molecular weight polyol has a molecular weight of between 50 and 500, preferably between 80 and 250, such as glycerol or pentaerythritol.

6. Process according to any one of the preceding claims wherein the amount of cyclic lipopeptide biosurfactant ranges from 0.1 to 5 wt%, preferably from 0.5 to 2 wt% based on the total amount of cyclic lipopeptide biosurfactant, the polyether having at least one reactive silyl group and the low molecular weight polyol.

7. Process according to any one of the preceding claims wherein the amount of low molecular weight polyol ranges from 4 to 25 wt%, preferably from 10 to 20 wt% based on the total amount of cyclic lipopeptide biosurfactant, the polyether having at least one reactive silyl group and the low molecular weight polyol.

8. Process according to any one of the preceding claims wherein the weight ratio between low molecular weight polyol and cyclic lipopeptide biosurfactant is between 7/1 and 30/1, preferably between 10/1 and 15/1.

9. Process according to any one of the preceding claims wherein steps (a), (b), (c) and (d) are carried out at a temperature of between 20 and 100°C, preferably between 35 and 85°C.

10. Process according to any one of the preceding claims wherein in step (a) water is used together with the low molecular weight polyol.

11. Aqueous emulsion of a polyether having at least one reactive silyl group containing a cyclic lipopeptide biosurfactant obtainable by the process as defined in any one of the preceding claims.

12. Aqueous emulsion according to claim 11 further containing a catalyst, preferably a strong acid catalyst such as methyl sulfonic acid or alkyl acid phosphate.

13. Use of an aqueous emulsion according to claim 11 or 12 for binder, coating or adhesive, foamed or non-foamed applications.

## Patentansprüche

1. Verfahren zum Herstellen einer wässrigen Emulsion eines Polyethers mit mindestens einer reaktiven Silylgruppe, vorzugsweise einer reaktiven endständigen Silylgruppe, umfassend die Schritte von:
(a) Mischen eines zyklischen Lipopeptid-Biotensids mit einem niedermolekularen Polyol,
(b) Zugeben des Polyethers mit mindestens einer reaktiven Silylgruppe zu der in Schritt (a) erhaltenen Mischung unter kontinuierlichem Mischen, um ein Gel zu bilden,
(c) Zugeben von Wasser zu dem in Schritt (b) erhaltenen Gel unter kontinuierlichem Mischen,
(d) Fortsetzen des Mischens,
(e) Abkühlen des Gemischs auf Umgebungstemperatur, falls erforderlich.

2. Verfahren nach Anspruch 1, wobei die Hauptkette des Polyethers mit mindestens einer reaktiven Silylgruppe eine Polyoxypropylenkette ist.

3. Verfahren nach einem der vorstehenden Ansprüche, wobei die reaktive Silylgruppe eine Silylgruppe ist, enthaltend mindestens eine Alkoxygruppe, vorzugsweise zwei oder drei Alkoxygruppen, und vorzugsweise ausgewählt ist aus mindestens einer von Methyldimethoxysilylgruppe, Trimethoxysilylgruppe und Triethoxysilylgruppe.

4. Verfahren nach einem der vorstehenden Ansprüche, wobei das zyklische Lipopeptid-Biotensid ein Tensid oder ein Salz davon ist, dargestellt durch die Formel, wobei X ein Rest einer Aminosäure ist, ausgewählt aus Leucin, Isoleucin und Valin, und R eine C₉₋₁₈-Alkylgruppe ist, die verzweigt sein kann, und M Wasserstoff, ein Alkalimetall, ein Erdalkalimetall, ein optional substituiertes Amin oder dergleichen ist.

5. Verfahren nach einem der vorstehenden Ansprüche, wobei das niedermolekulare Polyol ein Molekulargewicht zwischen 50 und 500, vorzugsweise zwischen 80 und 250, hat, wie z. B. Glycerin oder Pentaerythritol.

6. Verfahren nach einem der vorstehenden Ansprüche, wobei die Menge des zyklischen Lipopeptid-Biotensids von 0,1 bis 5 Gew.-% reicht, vorzugsweise von 0,5 bis 2 Gew.-% bezogen auf die Gesamtmenge des zyklischen Lipopeptid-Biotensids, wobei der Polyether mindestens eine reaktive Silylgruppe und das niedermolekulare Polyol hat.

7. Verfahren nach einem der vorstehenden Ansprüche, wobei die Menge des niedermolekularen Polyols von 4 bis 25 Gew.-% reicht, vorzugsweise von 10 bis 20 Gew.-% bezogen auf die Gesamtmenge des zyklischen Lipopeptid-Biotensids, wobei der Polyether mindestens eine reaktive Silylgruppe und das niedermolekulare Polyol hat.

8. Verfahren nach einem der vorstehenden Ansprüche, wobei das Gewichtsverhältnis zwischen niedermolekularem Polyol und zyklischem Lipopeptid-Biotensid zwischen 7/1 und 30/1, vorzugsweise zwischen 10/1 und 15/1 ist.

9. Verfahren nach einem der vorstehenden Ansprüche, wobei die Schritte (a), (b), (c) und (d) bei einer Temperatur von zwischen 20 und 100°C, vorzugsweise zwischen 35 und 85°C, durchgeführt werden.

10. Verfahren nach einem der vorstehenden Ansprüche, wobei in Schritt (a) Wasser zusammen mit dem niedermolekularen Polyol verwendet wird.

11. Wässrige Emulsion eines Polyethers mit mindestens einer reaktiven Silylgruppe, enthaltend ein zyklisches Lipopeptid-Biotensid, erhältlich durch das Verfahren wie in einem der vorstehenden Ansprüche definiert.

12. Wässrige Emulsion nach Anspruch 11, ferner enthaltend einen Katalysator, vorzugsweise einen stark sauren Katalysator wie z. B. Methylsulfonsäure oder Alkylsäurephosphat.

13. Verwendung einer wässrigen Emulsion nach Anspruch 11 oder 12 für Bindemittel, Beschichtungen oder Klebstoffe, geschäumte oder ungeschäumte Anwendungen.

## Revendications

1. Procédé pour préparer une émulsion aqueuse d'un polyéther ayant au moins un groupe silyle réactif, de préférence un groupe silyle terminal réactif, comprenant les étapes de
(a) mélange d'un biotensioactif lipopeptidique cyclique avec un polyol de faible masse moléculaire,
(b) addition du polyéther ayant au moins un groupe silyle réactif au mélange obtenu dans l'étape (a) sous mélange continu afin de former un gel,
(c) addition d'eau au gel obtenu dans l'étape (b) sous mélange continu,
(d) poursuite du mélange,
(e) refroidissement du mélange à la température ambiante si nécessaire.

2. Procédé selon la revendication 1, dans lequel la chaîne principale du polyéther ayant au moins un groupe silyle réactif est une chaîne polyoxypropylène.

3. Procédé selon l'une quelconque des revendications précédentes, dans lequel le groupe silyle réactif est un groupe silyle contenant au moins un groupe alcoxy, de préférence deux ou trois groupes alcoxy, et est de préférence au moins un choisi parmi un groupe méthyldiméthoxysilyle, un groupe triméthoxysilyle et un groupe triéthoxysilyle.

4. Procédé selon l'une quelconque des revendications précédentes, dans lequel le biotensioactif lipopeptidique cyclique est la surfactine ou un sel de celle-ci représenté par la formule dans laquelle X est un résidu d'un acide aminé choisi parmi la leucine, l'isoleucine et la valine et R est un groupe alkyle en C₉ à C₁₈, qui peut être ramifié et M est l'hydrogène, un métal alcalin, un métal alcalino-terreux, une amine éventuellement substituée ou analogue.

5. Procédé selon l'une quelconque des revendications précédentes, dans lequel le polyol de faible masse moléculaire a une masse moléculaire comprise entre 50 et 500, de préférence entre 80 et 250, tel que le glycérol ou le pentaérythritol.

6. Procédé selon l'une quelconque des revendications précédentes, dans lequel la quantité de biotensioactif lipopeptidique cyclique est située dans la plage allant de 0,1 à 5 % en poids, de préférence de 0,5 à 2 % en poids par rapport à la quantité totale de biotensioactif lipopeptidique cyclique, du polyéther ayant au moins un groupe silyle réactif et du polyol de faible masse moléculaire.

7. Procédé selon l'une quelconque des revendications précédentes, dans lequel la quantité de polyol de faible masse moléculaire est située dans la plage allant de 4 à 25 % en poids, de préférence de 10 à 20 % en poids par rapport à la quantité totale de biotensioactif lipopeptidique cyclique, du polyéther ayant au moins un groupe silyle réactif et du polyol de faible masse moléculaire.

8. Procédé selon l'une quelconque des revendications précédentes, dans lequel le rapport en poids entre le polyol de faible masse moléculaire et le biotensioactif lipopeptidique cyclique est compris entre 7/1 et 30/1, de préférence entre 10/1 et 15/1.

9. Procédé selon l'une quelconque des revendications précédentes, dans lequel les étapes (a), (b), (c) et (d) sont mises en oeuvre à une température comprise entre 20 et 100°C, de préférence entre 35 et 85°C.

10. Procédé selon l'une quelconque des revendications précédentes, dans lequel, dans l'étape (a), de l'eau est utilisée conjointement avec le polyol de faible masse moléculaire.

11. Emulsion aqueuse d'un polyéther ayant au moins un groupe silyle réactif contenant un biotensioactif lipopeptidique cyclique pouvant être obtenu par le procédé tel que défini dans l'une quelconque des revendications précédentes.

12. Emulsion aqueuse selon la revendication 11, contenant en outre un catalyseur, de préférence un catalyseur de type acide fort tel que l'acide méthylsulfonique ou un phosphate acide d'alkyle.

13. Utilisation d'une émulsion aqueuse selon la revendication 11 ou 12 pour des applications de liant, de revêtement ou d'adhésif, expansé ou non expansé.
